(19) Europäisches Patentamt
European Patent Office
Office européen des brevets

(11) Publication number: 0 222 409 B1

(12) # EUROPEAN PATENT SPECIFICATION

(45) Date of publication of patent specification: **12.02.92**

(51) Int. Cl.[5]: **C08L 27/16**, //(C08L27/16, 71:02)

(21) Application number: **86115817.8**

(22) Date of filing: **14.11.86**

(54) **Vulcanizable elastomeric compositions of fluoroelastomers.**

(30) Priority: **15.11.85 IT 2286485**

(43) Date of publication of application:
**20.05.87 Bulletin 87/21**

(45) Publication of the grant of the patent:
**12.02.92 Bulletin 92/07**

(84) Designated Contracting States:
**DE FR GB NL**

(56) References cited:
**FR-A- 2 413 426**
**GB-A- 1 356 344**

(73) Proprietor: **AUSIMONT S.p.A.**
**31, Foro Buonaparte**
**I-20121 Milano(IT)**

(72) Inventor: **Strepparola, Ezio**
**6, viale Partigiano**
**I-24047 Treviglio Bergamo(IT)**
Inventor: **Moggi, Giovanni**
**14, via Galilei**
**I-20124 Milan(IT)**
Inventor: **Cirillo, Gianna**
**8/7, Salita S. Francesco**
**I-16124 Genova(IT)**

(74) Representative: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40(DE)**

EP 0 222 409 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to new cross-linking agents of the class of dihydroxypolyfluoroethers and to the use thereof in the vulcanization of fluoroelastomers based on vinylidene fluoride.

Vulcanized elastomers based on vinylidene fluoride copolymers in which vinylidene fluoride is copolymerized with one or more monomers containing an ethylenic unsaturation and at least one fluorine atom are well-known and are widely utilized in a range of applications which require an exceptional chemical stability towards solvents, lubricants, fuels, acids and analogous products, even at very high temperatures.

The vulcanized articles obtained from such elastomeric polymers are most suitably utilized as sealing gaskets in general, both in static and dynamic conditions, in the automotive, aeronautic, missile, naval, mechanical and chemical sectors and as protection for various supports by making them impermeable, for example, as protective clothes against aggressive chemical agents or as sheaths for electric cables which are exposed to strong heat radiation and, finally, as protective coatings of industrial containers.

According to the most advanced prior art, the vulcanizable compositions of fluoroelastomers based on vinylidene fluoride comprise:

(A) A copolymer of vinylidene fluoride with at least one other fluorinated monomer containing an ethylenic unsaturation;

(B) A vulcanization accelerator selected from quaternary ammonium salts, quaternary phosphonium salts and phosphoranamine derivatives;

(C) One or more basic acceptors (basic agents which are acceptors for acids) such as MgO and $Ca(OH)_2$;

(D) A cross-linking agent having a bisphenol structure, for example, bisphenol AF.

Examples of these compositions are described in GB-A-1 356 344 and US-A- 3 876 654 and 4 259 463.

As compared with other cross-linking agents of the art, the use of cross-linking agents having the structure of bisphenols lends good stability to the fluoroelastomers towards heat treatment. This stability is, however, accompanied by elasticity properties which are not too favourable as regards compression set after thermal post-treatment.

Furthermore, the use of other linear-chain cross-linking agents with hydroxyl end groups is known; see, for example, those described in US-A-4 188 352.

Representative examples of these compounds are:

$HOCH_2-(CF_2)_3-CH_2OH$
$HOCH_2-CF_2-CH_2(CF_2)_3-CFHCF_2CH_2OH$

However, the preferred compositions, as total balance of the vulcanizing properties of the fluoroelastomers based on vinylidene fluoride, are obtained by using the compounds belonging to the class of bisphenol, in particular bisphenol AF.

There was, thus, a great need for cross-linking agents which are capable of improving the stability towards thermal post-treatment associated with a better permanent resistance to compression (low compression set values) and to extrusion.

It has now unexpectedly and surprisingly been found that, with the use of dihydroxypolyfluoroethers as cross-linking agent, a vulcanizate based on vinylidene fluoride having a better overall balance of the above-mentioned properties, even after a thermal post-treatment, is obtained.

Thus, an object of the present invention are dihydroxypolyfluoroethers having a molecular weight ranging from 360 to 2000 inclusive, selected from those classes of compounds which comprise the following oxyfluoroalkylene repeating units:

I $(C_2F_4O)$, $(CF_2O)$, said units being statistically distributed along the fluoropolyoxyalkylene chain

II $(C_3F_6O)$, $(C_2F_4O)$, (CFXO), wherein X is -F or -CF, said units being statistically distributed along the fluoropolyoxyalkylene chain,

III $- CH_2 - CF_2 - CF_2 - O -$

said units being linked within the fluoropolyoxyalkylene chain in the following manner:

$$-(O - CF_2 - CF_2 - CH_2)_p- O - R'_f - O (-CH_2 - CF_2 - CF_2-O)_q-$$

wherein $R'_f$ is a fluoroalkylene group of 1 to 8 carbon atoms and p and q are integers having a value of 1, 2, 3, 4, 5, or 6.

IV

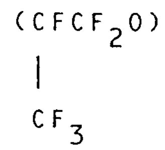

said units being linked within the fluoropolyoxyalkylene chain in the following manner:

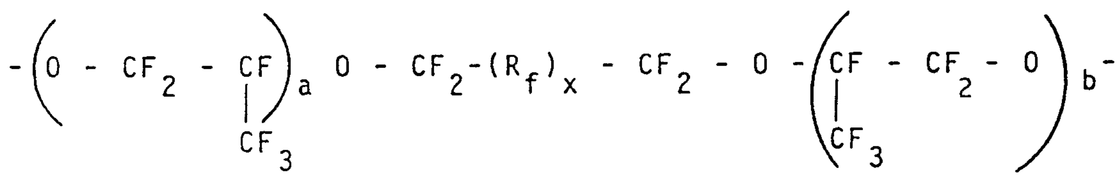

wherein $R_f$ is a fluoroalkylene group of 1 to 8 carbon atoms, x is 0 or 1 and a and b are integers having a value of 1, 2, 3, or 4.

The diols of the indicated classes may also be present as mixtures.

Fluoropolyoxyalkylene diols belonging to class I are, in particular, selected from compounds having the following general formula:

$HZ\text{-}CF_2O(C_2F_4O)_m(CF_2O)_nCF_2\text{-}ZH$

wherein Z is

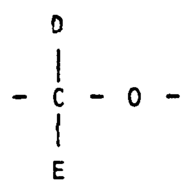

where D and E are the same or different and are selected from -H, $-CH_3$ and $-CF_3$, m and n are integers, m + n having a value of 2 to 22, and the ratio m/n ranges from 0.5 to 1.5, the oxyfluoroalkylene units being statistically distributed along the chain. These compounds can, for example, be prepared according to the methods described in US-A-3 810 874.

Fluorinated diols belonging to class II are, in particular, selected from the compounds having the following general formula:

$HZ\text{-}CF_2\text{-}(C_3F_6O)_r(C_2F_4O)_s(CFXO)_t\text{-}CF_2\text{-}ZH$

in which X is -F or $-CF_3$, r is an integer having a value of 1 to 3, s is an integer having a value of 1 to 7, t is an integer having a value of 1 to 7 and Z is the same as defined above.

As described in US-A- 3 665 041 such compounds may be prepared by photooxidation of mixtures of $C_3F_6$ and $C_2F_4$, and by subsequent conversion of the -COF end groups to groups containing the end group -OH, said conversion being carried out according to known methods described in US-A-3 847 978 and 3 810 874.

Fluorinated diols belonging to class III are, in particular, selected from the compounds having the general formula:

$HZ\text{-}CF_2CH_2(OCF_2CF_2CH_2)_p\text{-}OR'_fO\text{-}(CH_2CF_2CF_2O)_qCH_2CF_2\text{-}ZH$

and described in EP-A-148 482, in which the -COF end groups can be converted to -OH end groups, as described in US-A-3 847 978 and 3 810 874, Z being the same as defined above and $R'_f$ being a perfluoroalkylene group, in particular, $-CF_2\text{-}CF_2\text{-}$.

Fluorinated diols belonging to class IV are, in particular, selected from the compounds having the general formula:

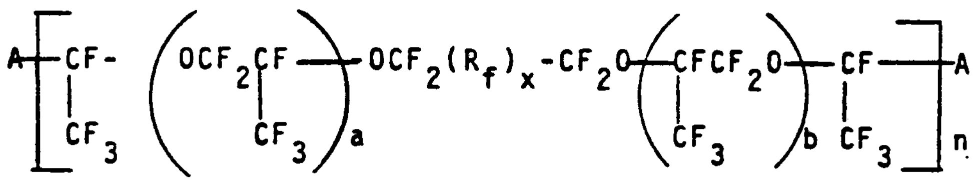

wherein A is a group comprising the end group -OH, for example, $CH_2OH$, and n is an integer equal to or greater than 1.

Such compounds are described in EP-A-151 877.

The fluoroelastomers forming component (A) are, generally, copolymers of vinylidene fluoride and hexafluoropropene and, optionally, tetrafluoroethylene.

It is possible to use chlorotrifluoroethylene, 1-hydropentafluoropropene and 2-hydropentafluoropropene instead of hexafluoropropene.

It is also possible to utilize mixtures of the above comonomers.

The tetrafluoroethylene and/or hexafluoropropene units in the copolymers may be partially or fully replaced by perfluoroalkylvinylether units.

The amount of perfluoroalkylvinylether units generally ranges from 0.5 to 15 mole %, based on the total amount of copolymer. Preferably, it is lower than 5 mole%.

Other fluorinated monomers may also be employed as comonomers, provided they contain an ethylene-type double bond and at least one fluorine atom.

Compounds (A) may be prepared as described in the literature (Kirk-Othmer, Encyclopaedia of Chem. Technology, Vol. 8, pages 500 ff., 1979) by preferably operating in an aqueous emulsion and, optionally, in the presence of chain transfer agents like those described in US-A-4 000 356.

The copolymers in which the amount of vinylidene fluoride ranges from 40 to 85 mole%, the amount of perfluoropropene ranges from 15 to 30 mole% and the amount of tetrafluoroethylene ranges from 0 to 30 mole% are particularly preferred.

Accelerator (B) belongs to the classes previously mentioned, the preferred compounds being:

- From among the quaternary ammonium salts: methyltrioctylammonium chloride, laurylpyridinium bromide and benzyltrioctylammonium chloride;
- From among the quaternary phosphonium salts: benzyltriphenylphosphonium chloride, benzyltriphenylphosphonium tetrafluoroborate, methyltrioctyphosphonium acetate and carbethoxymethyltriphenylphosphonium bromide;
- From among the phosphoranamine derivatives or aminophosphonium compounds: 1-chloro - 1-benzyl - 1,1-diphenyl-N-(diethyl)phosphoranamine;1-tetrafluoroborate - 1-benzyl-N,N'N"-(hexamethyl)-phosphorantriamine; 1-bromo - 1-benzyl-1-phenyl-N,N'-(tetraethyl)phosphorandiamine.

Component (C) is an inorganic compound such as an oxide of a divalent metal, for example, ZnO, MgO, PbO, CaO or a mixture of the oxides and hydroxides of said metals or a salt of a weak acid, as is described in US-A-3 876 654.

Compound (D) is a dihydroxypolyfluoroether as defined above.

Generally, per 100 parts by weight of an elastomeric copolymer of vinylidene fluoride (A) and one or more fluorinated monomers as indicated above, there are employed:

- 1 to 40 parts by weight of basic acceptor (C) consisting of one or more oxides of divalent metals as specified above, optionally, in the form of cationic complexes or chelates, optionally, in the presence of 0 to 10 parts by weight of one or more basic compounds selected from the group comprising calcium, strontium and barium hydrates, metal salts of weak acids such as carbonates, benzoates, and phosphates of calcium, strontium, barium, sodium and potassium, optionally, in the form of complexes with the usual cationic chelating or complexing compounds of the type well known to those skilled in the art;
- 1 to 15 parts by weight of dihydroxypolyfluoroether (D) as specified above;
- 0.05 to 5 parts by weight of a vulcanization accelerator (B) selected from those classes described above.

The vulcanizable compositions of the abovementioned type are vulcanized by means of a process wherein said compositions are first heated under pressure at temperatures from 130 to 230 °C, preferably from 160 to 200 °C, for 0.5 to 60 minutes and, preferably, for 1 to 20 minutes. The resulting articles are then post-vulcanized in an oven or in a furnace, at atmospheric pressure, at temperatures from 130 to 315 °C, preferably from 200 to 275 °C, for 5 to 48 hours, preferably from 10 to 24 hours.

It has, surprisingly, been found that the vulcanizable compositions of the present invention, through extrusion moulding and subsequent vulcanization and also by utilizing highly automatized injection technology, can be transformed to articles of any shape and dimension. No drawbacks such as scorching or hot-tearing phenomena are encountered at the plastification temperatures usually employed for injection moulding.

Such articles exhibit an excellent stability towards permanent compression deformation, a very low tendency to scorching as function of the storage time and temperature or of the temperatures of particular processing technologies such as, for example, extrusion. They also exhibit a high stability with respect to thermal ageing. Furthermore, they can be bonded to various kinds of metallic substrates to which they firmly adhere, even at high temperatures.

It has also been observed that the vulcanizable compositions comprising components (A) to (D) described above do not stick to the moulds or soil them so that there are practically no production rejections. Thus, high production standards and extremely regular processing cycles are attained.

More generally, the composition according to the invention may advantageously contain all kinds of fluorinated polymeric materials based on vinylidene fluoride of the elastomeric type, optionally, containing substituents other than fluorine and chlorine, and also mixtures of two or more fluorinated elastomers.

The vulcanizable compositions according to the invention may, in addition to the aforesaid components (A) to (D), contain carbon black, white and coloured fillers, conventional plasticizers and lubricants such as stearates, arylphosphates, polyethers, polyesters, polyethylene, sulphones, sulphoxides and other known additives, according to the techniques usually adopted by the users of fluorinated elastomers.

The components of the vulcanizable compositions according to the present invention can readily be incorporated into the elastomeric copolymer of vinylidene fluoride, either individually or premixed.

In this way it is possible to achieve good vulcanization rates at the usual processing temperatures without any risk of scorching (prevulcanization) during the initial processing steps which precede the actual vulcanization.

A further advantage of the present invention is the full elimination of the undesired phenomenon of "reduced mould shrinkage" of fluorinated elastomer articles, particularly in the case of O-ring gaskets, during vulcanization in a closed mould and under pressure.

In a preferred embodiment of the present invention the mixture of phosphoranamine accelerator (B) (0.2 to 2 parts by weight) and of dihydroxypolyfluoroether cross-linking agent (D) (2 to 8 parts by weight) is added to the fluorinated elastomer (100 parts by weight) prior to the addition of the basic acceptor (2 to 10 parts by weight), of the basic compounds (1 to 7 parts by weight), of the reinforcing and inert fillers, the lubricants, the plasticizers and further optional additives.

By operating in this way, it is possible to achieve a prompt, controllable and uniform vulcanization without giving rise to undesired phenomena such as scorching during the various processing steps of the mixture or during its storage.

The vulcanized elastomers prepared from the compositions of the present invention may be utilized as sealing gaskets, both in static and dynamic conditions, in the automotive, mechanical and naval sectors, as protective clothes against aggressive chemical agents, as sheaths for the protection of electric cables when exposed to an intense thermal radiation and in analogous applications, as already mentioned.

The following examples merely serve to illustrate the invention and do not limit it in any way.

EXAMPLES 1 to 6

In the examples reported in table 1 the following products were used:

Fluoroelastomers $CH_2 = CF_2/C_3F_6$ copolymer in a molar ratio of 4/1, having a specific weight of 1.8 at 25°C, known as Technoflon NM® (Montedison S.p.A.).

Accelerator 1 1-chloro-1,1-diphenyl-1-benzyl - N-diethylphosphoranamine.

Accelerator 2 Benzyltriphenylphosphonium chloride.

Dihydroxypolyfluoropolyether 1 (cross-linking agent) of the formula $HOCH_2CF_2(C_2F_4O)_m(CF_2O)_nCF_2CH_2OH$ and having a mean molecular weight (based on the hydroxyl titre) of 40 and an m/n ratio of 0.9.

Dihydroxypolyfluoropolyether 2 of the same general formula as the preceding polyether but having an average molecular weight of 800.

The results of the tests reported in table 1 show that the compositions of the invention lead to better compression set values, to an improvement of the heat stability properties after ageing at 270°C and to an improvement of the extrudability when compared with the values obtained in comparative example 1, wherein bisphenol AF is utilized as a cross-linking agent.

TABLE 1

| Elastomeric composition: VULCANIZATION: in press at 170°C for 10 min., in oven at 250°C for 16 hours | | EXAMPLE 1 | 2 | 3 | 4 | 5 | 6 |
|---|---|---|---|---|---|---|---|
| Elastomer 1 | p. by wt. | 100 | 100 | 100 | 100 | 100 | 100 |
| Bisphenol AF | p. by wt. | 1.7 | - | - | - | - | - |
| Accelerator 1 | p. by wt. | 0.48 | 0.48 | 0.4 | 0.48 | - | 0.48 |
| Accelerator 2 | p. by wt. | - | - | - | - | 0.5 | - |
| Dihydroxyfluoropolyether 1 | p. by wt. | - | 4 | 4 | - | - | 3 |
| Dihydroxyfluoropolyether 2 | p. by wt. | - | - | - | 6.0 | 6.0 | - |
| MgO | p. by wt. | 3 | 3 | 3 | 3 | 3 | 3 |
| $Ca(OH)_2$ | p. by wt. | 6 | 6 | 6 | 6 | 6 | 6 |
| CARBON BLACK MT | p. by wt. | 30 | 30 | 30 | 30 | 30 | 30 |
| EXTRUDABILITY TEST (5) | (edge | 7 | 8 | 8 | 8 | 9 | 8 |
| " " " " | (surface | B | A | A | A | A | A |
| CHARACTERISTICS OF THE VULCANIZATE | | | | | | | |
| Tensile strength (1) | M Pa | 16.8 | 16.3 | 16.0 | 16.5 | 16.0 | 15.5 |
| Modulus at 100% (1) | M Pa | 7.5 | 8.2 | 7.8 | 8.5 | 8.0 | 8.5 |
| Elongation at break (1) | % | 175 | 160 | 150 | 155 | 160 | 150 |
| Shore hardness A (2) | points | 75 | 76 | 73 | 78 | 76 | 78 |
| "Compression set" on discs, compression during 70 hours at 200°C (3) | % | 17 | 15 | 13 | 14 | 15 | 16 |
| Thermal stability at 275°C for 70 hours (4) | | | | | | | |
| Δ Tensile strength | % | -35 | -10 | -8 | -10 | -12 | -11 |
| Δ Elongation at break | % | +15 | -5 | -4 | -7 | -8 | -6 |
| Δ Shore hardness A | points | +3 | +2 | +1 | +2 | +2 | +2 |

(1) ASTM D 412
(2) ASTM D 2240
(3) ASTM D 395 - Method B
(4) ASTM D 573
(5) ASTM D 2230 - 73 Method A - System B

## Claims

**1.** Vulcanizable compositions of fluoroelastomers based on vinylidene fluoride exhibiting improved processability and improved stability to heat post-treatment and comprising, as cross-linking agents, dihydroxypolyfluoroethers having a molecular weight from 360 to 2000, selected from those classes of compounds which comprise the following oxyfluoroalkylene repeating units:

I ($C_2F_4O$), ($CF_2O$), said units being statistically distributed along the fluoropolyoxyalkylene chain;
II ($C_3F_6O$), ($C_2F_4O$), (CFXO), wherein X is -F or -$CF_3$, said units being statistically distributed along the fluoropolyoxyalkylene chain;

III $-CH_2-CF_2-CF_2-O-$
said units being linked within the fluoropolyoxyalkylene chain in the following manner:

$-(O-CF_2-CF_2-CH_2)_p-O-R'_f-O(-CH_2-CF_2-CF_2-O)_q-$

wherein $R'_f$ is a fluoroalkylene group containing from 1 to 8 carbon atoms and p and q are integers of from 1 to 6;
IV

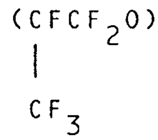

said units being linked within the fluoropolyoxyalkylene chain in the following manner:

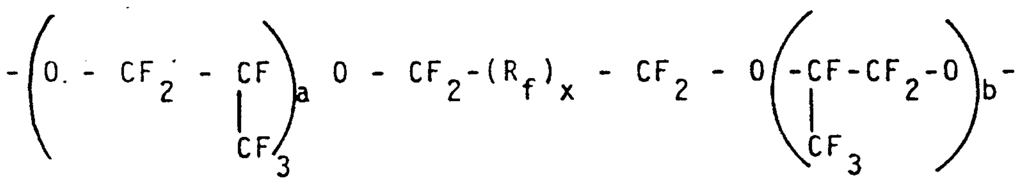

wherein $R_f$ is a fluoroalkylene group containing from 1 to 8 carbon atoms, x is 0 or 1 and a and b are integers of from 1 to 4.

**2.** Vulcanizable compositions according to claim 1, comprising fluoropolyoxyalkylene diols belonging to class I, selected from compounds having the general formula:

$HZ-CF_2O(C_2F_4O)_m(CF_2O)_nCF_2-ZH$

wherein Z is

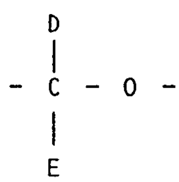

where D and E are the same or different and are selected from -H, $-CH_3$ and $-CF_3$, m and n are integers and the ratio m/n is from 0.5 to 1.5, the oxyfluoroalkylene units being statistically distributed along the chain.

**3.** Vulcanizable compositions according to claim 1, comprising fluoropolyoxyalkylene diols belonging to class II, selected from compounds having the following general formula:

$HZ-CF_2-(C_3F_6O)_r(C_2F_4O)_s(CFXO)_t-CF_2-ZH$

in which X is -F or $-CF_3$, r is an integer having a value of 1 to 3, s is an integer having a value of 1 to 7, t is an integer having a value of 1 to 7 and Z is as defined in claim 2.

**4.** Vulcanizable compositions according to claim 1, comprising fluoropolyoxyalkylene diols belonging to class III, selected from compounds having the general formula:

$HZ-CF_2CH_2(OCF_2CF_2CH_2)_p-OR'_fO-(CH_2CF_2CF_2O)_qCH_2CF_2-ZH$

where Z is as defined in claim 2 and $R'_f$ is as defined in claim 1.

**5.** Vulcanizable compositions according to claim 1, comprising fluoropolyoxyalkylene diols belonging to class IV, selected from compounds having the general formula:

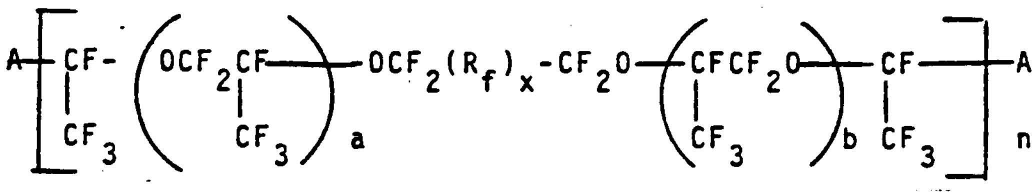

where A is a group comprising the end group -OH and n is an integer equal to or greater than 1.

**6.** Vulcanizable compositions according to any one of claims 1 to 5, wherein the dihydroxypolyfluoroether cross-linking agent is present in amounts ranging from 1 to 15 parts by weight per 100 parts of fluoroelastomer.

**7.** Vulcanizable compositions according to any one of claims 1 to 6, wherein the fluoroelastomer consists of a copolymer of vinylidene fluoride, hexafluoropropene and, optionally, tetrafluoroethylene.

**Revendications**

**1.** Compositions vulcanisables de fluoroélastomères à base de fluorure de vinylidène présentant une aptitude à la transformation élevée et une résistance améliorée à un posttraitement thermique et comprenant comme agents de réticulation des dihydroxypolyfluoroéthers dont le poids moléculaire est compris entre 360 et 2000, bornes comprises, choisis parmi les classes de produits qui comprennent les motifs répétitifs oxyfluoroalkylène suivants:

I ($C_2F_4O$), ($CF_2O$), ces motifs étant distribués statistiquement le long de la chaîne fluoropolyoxyalkylène

II ($C_3F_6O$), ($C_2F_4O$), (CFXO), dans lesquels X représente -F ou -CF, ces motifs étant distribués statistiquement le long de la chaîne fluoropolyoxyalkylène,

III $-CH_2-CF_2-CF_2-O-$

ces motifs étant, au sein de la chaîne fluoropolyoxyalkylène, reliés de la façon suivante:

$$-(O-CF_2-CF_2-CH_2)_p-O-R'_f-O(-CH_2-CF_2-CF_2-O)_q-$$

dans laquelle $R'_f$ représente un groupe fluoroalkylène renfermant de 1 à 8 atomes de carbone et p et q sont des nombres entiers ayant une valeur égale à 1, 2, 3, 4, 5 ou 6.

IV

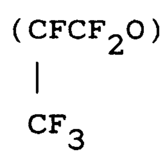

ces motifs étant, au sein de la chaîne fluoropolyoxyalkylène, reliés de la façon suivante:

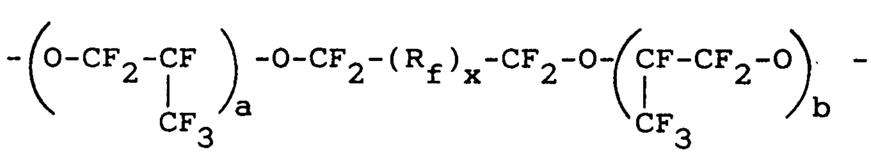

dans laquelle $R_f$ représente un groupe fluoroalkylène renfermant de 1 à 8 atomes de carbone, x est

égal à 0 ou 1 et a et b sont des nombres entiers présentant une valeur de 1, 2, 3 ou 4.

**2.** Compositions vulcanisables selon la revendication 1, comprenant des fluoropolyoxyalkylène-diols appartenant à la classe I, choisis parmi les dérivés répondant à la formule générale:

$Z\text{-}CF_2O(C_2F_4O)_m(CF_2O)_nCF_2\text{-}ZH$

dans laquelle Z représente

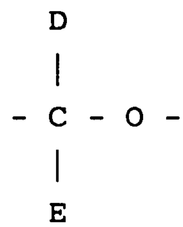

dans laquelle D et E sont identiques ou différents et sont choisis parmi -H, $-CH_3$ et $-CF_3$, m et n étant des nombres entiers et le rapport m/n est compris entre 0,5 et 1,5, les motifs oxyfluoroalkylène étant distribués statistiquement le long de la chaîne.

**3.** Compositions vulcanisables selon la revendication 1, comprenant des fluoropolyoxyalkylène-diols appartenant à la classe II, choisis parmi des dérivés répondant à la formule:

$HZ\text{-}CF_2\text{-}(C_3F_6O)_r(C_2F_4O)_s(CFXO)_t\text{-}CF_2\text{-}ZH$

dans laquelle X représente -F ou $-CF_3$, r est un nombre entier d'une valeur de 1 à 3, s est un nombre entier d'une valeur de 1 à 7, t est un nombre entier d'une valeur de 1 à 7 et Z est tel que défini dans la revendication 2.

**4.** Compositions vulcanisables selon la revendication 1, comprenant des fluoropolyoxyalkylène-diols appartenant à la classe III, choisis parmi les dérivés répondant à la formule générale:

$HZ\text{-}CF_2CH_2(OCF_2CF_2CH_2)_p\text{-}OR'_fO\text{-}(CH_2CF_2CF_2O)_qCH_2CF_2\text{-}ZH$

dans laquelle Z est tel que défini dans la revendication 2 et $R'_f$ est tel que défini dans la revendication 1.

**5.** Compositions vulcanisables selon la revendication 1, comprenant des fluoropolyoxyalkylène-diols appartenant à la classe IV, choisis parmi les dérivés répondant à la formule générale:

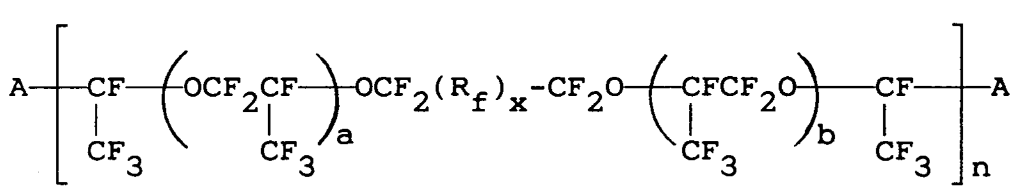

dans laquelle A est un groupe comprenant le groupe terminal -OH et n est un entier égal ou supérieur à 1.

**6.** Compositions vulcanisables selon l'une quelconque des revendications 1 à 5, caractérisées en que l'agent de réticulation, consistant en dihydroxypolyfluoroéther, est présent en une proportion comprise entre 1 et 15 parties en poids pour 100 parties de fluoroélastomère.

**7.** Compositions vulcanisables selon l'une quelconque des revendications 1 à 6, caractérisées en ce que

le fluoroélastomère est constitué d'un copolymère de fluorure de vinylidène, d'hexafluoropropène et, éventuellement, de tétrafluoroéthylène.

**Patentansprüche**

1. Vulkanisierbare Zusammensetzungen von Fluorelastomeren auf Vinylidenfluorid-Basis, die verbesserte Verarbeitbarkeit und verbesserte Stabilität bei der thermischen Nachbehandlung aufweisen und als Vernetzungsmittel Dihydroxypolyfluorether mit einem Molekulargewicht von 360 bis 2000 umfassen, die aus Verbindungsklassen ausgewählt sind, welche die folgenden Oxyfluoralkylen-Struktureinheiten umfassen:

   I $(C_2F_4O)$, $(CF_2O)$, wobei die Einheiten statistisch entlang der Fluorpolyoxyalkylenkette verteilt sind;
   II $(C_3F_6O)$, $(C_2F_4O)$, (CFXO), worin X -F oder $-CF_3$ ist, wobei die Einheiten statistisch entlang der Fluorpolyoxyalkylenkette verteilt sind;
   III $-CH_2-CF_2-CF_2-O-$
   wobei die Einheiten innerhalb der Fluorpolyoxyalkylenkette auf folgende Weise verknüpft sind:

   $-(O-CF_2-CF_2-CH_2)_p-O-R'_f-O(-CH_2-CF_2-CF_2-O-)_q-$

   worin $R'_f$ eine Fluoralkylengruppe mit 1 bis 8 Kohlenstoffatomen ist, und p und q ganze Zahlen von 1 bis 6 darstellen;
   IV

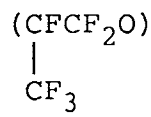

   wobei die Einheiten innerhalb der Fluorpolyoxyalkylenkette auf folgende Weise miteinander verknüpft sind:

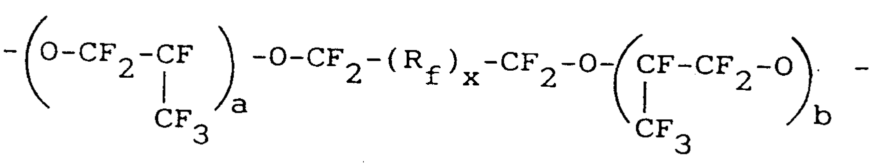

   worin $R_f$ eine Fluoralkylengruppe mit 1 bis 8 Kohlenstoffatomen ist, x 0 oder 1 ist und a und b ganze Zahlen von 1 bis 4 sind.

2. Vulkanisierbare Zusammensetzungen nach Anspruch 1, umfassend Fluorpolyoxyalkylen-Diole, die zur Klasse I gehören, ausgewählt aus Verbindungen der allgemeinen Formel

   $HZ-CF_2O(C_2F_4O)_m(CF_2O)_nCF_2-ZH$

   worin Z

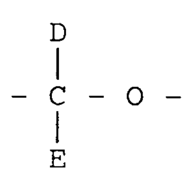

   darstellt,
   worin D und E gleich oder verschieden sind und aus -H, $-CH_3$ und $-CF_3$ ausgewählt sind, m und n

ganze Zahlen sind und das Verhältnis m/n 0.5 bis 1,5 beträgt, wobei die Oxyfluoralkyleneinheiten statistisch entlang der Kette verteilt sind.

**3.** Vulkanisierbare Zusammensetzungen nach Anspruch 1, umfassend Fluorpolyoxyalkylen-Diole, die zur Klasse II gehören, ausgewählt aus Verbindungen der folgenden allgemeinen Formel:

$HZ\text{-}CF_2\text{-}(C_3F_6O)_r(C_2F_4O)_s(CFXO)_t\text{-}CF_2\text{-}ZH$

worin X -F oder $-CF_3$ ist, r eine ganze Zahl mit einem Wert von 1 bis 3 darstellt, s eine ganze Zahl mit einem Wert von 1 bis 7 darstellt, t eine ganze Zahl mit einem Wert von 1 bis 7 bedeutet und Z wie in Anspruch 2 definiert ist.

**4.** Vulkanisierbare Zusammensetzungen nach Anspruch 1, umfassend Fluorpolyoxyalkylen-Diole, die zur Klasse III gehören, ausgewählt aus Verbindungen der allgemeinen Formel:

$HZ\text{-}CF_2CH_2(OCF_2CF_2CH_2)_p\text{-}OR'_fO\text{-}(CH_2CF_2CF_2O)_qCH_2CF_2\text{-}ZH$

worin Z wie in Anspruch 2 definiert ist und $R'_f$ wie in Anspruch 1 definiert ist.

**5.** Vulkanisierbare Zusammensetzungen nach Anspruch 1, umfassend Fluorpolyoxyalkylen-Diole, die zur Klasse IV gehören, ausgewählt aus Verbindungen der allgemeinen Formel:

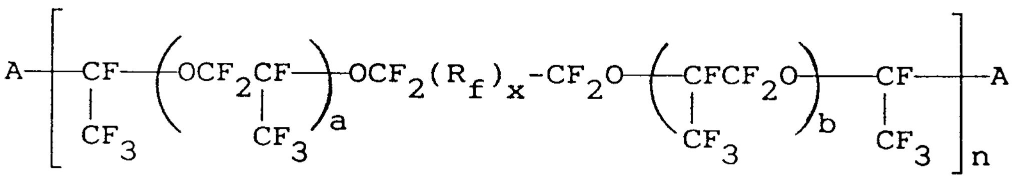

worin A eine Gruppe ist, welche die Endgruppe -OH enthält, und n eine ganze Zahl gleich oder größer als 1 bedeutet.

**6.** Vulkanisierbare Zusammensetzungen nach irgendeinem der Ansprüche 1 bis 5, worin der Dihydroxypolyfluorether als Vernetzungsmittel in Mengen von 1 bis 15 Gewichtsteilen pro 100 Teilen des Fluorelastomers anwesend ist.

**7.** Vulkanisierbare Zusammensetzungen nach irgendeinem der Ansprüche 1 bis 6, worin das Fluorelastomer aus einem Copolymer von Vinylidenfluorid, Hexafluorpropen und gegebenenfalls Tetrafluorethylen besteht.